# EUROPEAN PATENT APPLICATION

(11) **EP 2 284 454 A1**
(43) Date of publication of application: **16.02.2011**
(21) Application number: 09009922.7
(22) Date of filing: 31.07.2009
(51) Int. Cl.: F24J 2/52, E04D 5/00

(54) **Mounting system for solar panels, bearing member for same and associated methods**

(71) Applicant: Centrosolar AG, 22765 Hamburg (DE)
(72) Inventor: Kneip, Johannes, 01454 Radeberg (DE); Meyer, Thomas, 33100 Paderborn (DE); Bjelobrk, Miro, 28195 Bremen (DE)
(74) Representative: Gehrig, Philip Walter

(57) **Abstract**

The present invention relates to a mounting system (1) for mounting one or more solar panels (P). The mounting system (1) comprises: a plurality of elongate bearing members (10) adapted to be arranged spaced apart and substantially parallel to one another on a rooftop surface, and in particular on an outer sealing membrane (S) of the rooftop, and a plurality of fastening straps (20, 20') for fastening the bearing members (10) to the rooftop surface. Each of the bearing members (10) is adapted for mounting a solar panel (P) or a support frame (F) of a solar panel thereon, and each of the fastening straps (20) is adapted to engage one or more of the bearing members (10) and includes a securing region (21) for securing the strap to the rooftop surface. In this regard, each of the fastening straps (20, 20') is arranged, in use, to extend from one of the bearing members (10), preferably such that the securing region (21) of each fastening strap (20, 20') is outside or beyond a vertical projection of the respective bearing member (10) on the rooftop surface.

## Description

### Technical Field

The present invention relates to a mounting system for mounting one or more solar panels, and to an elongate bearing member for such a mounting system. A method of mounting a solar panel and a method of forming a bearing member according to the invention are also described.

The mounting system of the invention and the associated bearing member are particularly suitable for use in mounting solar panels on flat rooftops covered with a sealing layer, such as a polymeric, bituminous, or tar-based membrane, and it will be convenient to describe the invention in this exemplary context. It will be appreciated, however, that the mounting system and the bearing member of the invention are also suitable for use on other types of rooftops or supporting structures.

### Background of the Invention

As a result of an increasing trend towards the adoption of renewable energy sources, the installation of solar panels, and in particular of arrays of photo-voltaic panels, is gaining in popularity, not only for industrial and institutional applications, but also in the domestic and rural environments. Whether for the industrial, institutional, domestic or rural environment, the solar panels are often mounted on the rooftops of buildings - most typically in the area where the solar energy is required. Roof structures are particularly convenient for this purpose as they present a large surface area directed towards the sun and are often largely out of view from the normal visual perspective, thereby rendering the installations relatively unobtrusive. Horizontal or flat rooftops are particularly convenient for this purpose as they provide an even and stable working environment for the assembly, installation and maintenance of a solar panel array.

In many cases, horizontal or flat rooftops have a sealing layer as an outer covering and this sealing layer is typically formed by a flexible membrane of a rubber-based or polymer material, sometimes including bituminous or tar-based compounds. In particular, the sealing layer or "skin" of flat rooftops is often formed by one or more sheets of a flexible material selected from the group including thermoplastic polyolefins (TPOs) or flexible polyolefins, flexible polyolefin alloys (FPA), ethylene-propylene-diene M-class rubber (EPDM), poly-vinylchloride (PVC) and polymer-bitumen sheeting. Some of these materials have been in use in roofing structures since the 1960s and, as such, are commonly found on the rooftops of existing buildings today.

Such rooftops present particular problems in the mounting of solar panel arrays because it is especially important to ensure that the outer sealing layer or membrane of the rooftop remains intact and that no, or only minimal, perforation or penetration of the sealing layer occurs. In this regard, the flexible outer layer or membrane serves to ensure a seal against the ingress of water into the roof structure. Accordingly, every time the outer sealing layer or membrane sustains a perforation or puncture, the waterproof properties of the membrane are compromised and a potential source of rainwater leakage or seepage into the roof is created.

One of the known techniques for mounting of solar panel arrays on such flat rooftop surfaces includes the use of elongate bearing rails as the basic carrier elements for the solar panel array. The bearing rails typically have a constant profile or cross-section (sometimes called a "hat"-section due to similarity in shape with the typical form of a hat) and have conventionally been fastened or secured on the sealed outer surface of the rooftop in a number of different ways, including being held down with weights or ballast, bolts and screw fasteners, adhesive and solvent bonding, and cold or hot fusion or welding. These techniques have disadvantages, however.

The use of weights or ballast is cumbersome and is not appropriate for all rooftops because it substantially increases the loading on the roof structure. Bolts and screw fasteners have the disadvantage that they cause a penetration of the roof "skin" or sealing layer, which - as noted above - carries the inherent risk of a possible subsequent seepage or leakage of water into the roof structure. This risk is further heightened in the event that the solar panel array ever needs to be disassembled and removed from the rooftop.

Adhesive bonding and solvent bonding have the disadvantage of relatively low bond durability and can also not be employed for all types of conventional sealing layer or sealing sheet material. On the other hand, the technique discussed in German utility model DE 20 2008 209 134 U1, which describes the use of cold fusion or welding to secure the bearing rails to the roof surface, requires that the bearing rails first be coated with a material that corresponds to the sealing layer (e.g. PVC, TPO, EPDM, etc.), which can be extremely time- and cost-intensive. Furthermore, hot fusion or welding using a heating device with that arrangement can be difficult due to the rigidity of the rails and can lead to irregular bonding and associated failures.

All of the above fixation techniques also have the further disadvantage that forces generated due to thermal expansion of the solar panel modules arranged on and/or extending between the rail sections, have to be fully absorbed by the join between the rail and the sealing layer on the rooftop. With significantly different coefficients of thermal expansion between the roof structure and the solar modules, overloading or even tearing of the sealing layer can result.

In view of the above problems associated with the conventional mounting systems for solar panel arrays on rooftops sealed with a polymer or rubber-based sheet layer or membrane, it is an object of the present invention to provide a new and improved mounting system with which one or more of these problems may be overcome or at least minimized. It is also an object of the invention to provide an improved bearing rail for use in such a mounting system, and a method of forming such a bearing rail.

### Summary of the Invention

According to one aspect, the present invention provides a mounting system for one or more solar panels, comprising: a plurality of elongate bearing members adapted to be arranged spaced apart and substantially parallel to one another on a rooftop surface, and a plurality of flexible securing members for securing the bearing members to the rooftop surface. Each of the bearing members is adapted for supporting and mounting a solar panel or a fixation frame of the solar panel thereon. Each of the securing members is adapted to extend from at least one of the bearing members and includes a securing region adapted to be fastened to the rooftop surface.

In a preferred form of the invention, each of the flexible securing members is configured or arranged to extend from the respective bearing members such that the securing region of that securing member is arranged outside a plan or vertical projection of the bearing member onto the rooftop surface. In other words, the securing region is preferably arranged for fastening to the rooftop next to or adjacent the respective one of bearing members. For example, the securing region of each flexible securing member may be arranged to be fastened to the rooftop surface at one or more lateral side or longitudinal end region of the bearing member. The securing region of each flexible securing member is desirably to be fastened to the outer rooftop surface by adhesive bonding or by fusion or welding, such as hot or cold welding. Preferably, each of the flexible securing members is configured or arranged in use to extend over, across, and/or through at least one of the bearing members.

In a preferred form of the invention, each of the flexible securing members is formed substantially entirely from a flexible web of material, which may be compatible for adhesive or fusion bonding with the rooftop surface, such as, for example, any one of TPO, FPA, EPDM, PVC and/or a bituminous polymer. Alternatively, however, each of the flexible securing members may be only partially flexible. That is, each of the flexible securing members may comprise both a flexible portion (as above) and a substantially rigid portion. In a particular embodiment of the invention, each of the flexible securing members may be formed as a fastening strap.

According to another aspect, the present invention provides a mounting system for mounting one or more solar panels, comprising: a plurality of elongate bearing members adapted to be arranged spaced apart and substantially parallel to one another on a rooftop surface, and a plurality of fastening straps for fastening the bearing members to the rooftop surface. Each of the bearing members is adapted for mounting a solar panel or a support frame of a solar panel thereon, and each of the fastening straps is adapted to engage at least one of the bearing members and includes a securing region for securing the strap to the rooftop surface. By engaging one or more of the bearing members, each fastening strap acts to hold the respective bearing member securely in position on the rooftop.

In a preferred form of the invention, each of the fastening straps is configured or arranged, in use, to extend from one of the bearing members, e.g. in such a manner that the securing region of each fastening strap is arranged outside a vertical projection of the respective bearing member on the rooftop surface. In this way, the securing region of each fastening strap may be arranged to be fastened to the rooftop surface at one or more lateral side and/or one or more longitudinal end region of the bearing member. The securing region of each fastening strap is desirably adapted to be secured to the rooftop surface by adhesive bonding or by fusion or welding (e.g. hot or cold welding). In use, each fastening strap is preferably arranged to extend over, across, and/or through a respective one of the bearing members. As such, the portion of the strap which extends over, across, and/or through the bearing member engages that bearing member to hold or "strap" it securely to the roof.

In a preferred form of the invention, each fastening strap is at least partially, and preferably substantially entirely, formed as a flexible web, and preferably comprises a material compatible for adhesive or fusion bonding with the rooftop surface. In this way, each fastening strap may be formed such that at least the securing region of the strap is suitable for adhesive or welded fastening to the rooftop surface. For example, the strap is desirably formed as a web of any one of TPO, FPA, EPDM, PVC and/or a bituminous polymer. In this connection, the material of the fastening straps may be selected depending upon the material of the outer sealing layer or membrane on the rooftop and/or the type of bonding or welding to be used. The fastening strap may comprise a flexible web of any suitable size and shape for performing the desired function; i.e. it may be relatively long and narrow, or it may even be generally square or sheet-like. The decisive aspect in this respect is that the dimensions enable the fastening strap to perform the intended fastening function with the bearing member. The securing region of each fastening strap is desirably provided at an end region of the strap and presents an area for adhesion or fusion bonding with the rooftop surface. It will be noted, however, that the present invention also contemplates embodiments in which each of the fastening straps may be formed from a substantially rigid material. In such embodiments, the fastening straps may nevertheless still be suitable to be secured to the rooftop surface by adhesive bonding or by fusion or welding (e.g. hot or cold welding).

In a preferred form of the invention, each bearing member comprises at least one opening or recess for receiving one of the fastening straps when the fastening strap is arranged to extend over, across, and/or through the bearing member. In a particular preferred form of the invention, the at least one opening or recess includes one or more aperture formed in each of the bearing members for receiving one of the fastening straps with the strap extending transversely across and/or through the bearing member. In this regard, the one or more aperture may be formed as a slot through which the strap extends.

In a preferred form of the invention, each bearing member comprises: a base having at least one footing for supporting the bearing member on the rooftop surface, and an attachment region for attaching a solar panel or a support frame for the solar panel to the bearing member. Preferably, the attachment region is at an upper part of each bearing member and is spaced from the footing by one or more wall extending upwardly from the footing. Furthermore, in a particularly preferred form of the invention, each bearing member is formed as a channel section, more preferably as a U-shaped channel section, and most preferably as a "hat"-section.

In light of this preferred structure of the bearing member, the one or more aperture (e.g. slot) in the bearing member through which a respective one of the fastening straps is desirably arranged to extend is preferably located between the footing and the attachment region of the bearing member, and preferably adjacent or in close proximity to the footing such that, in use, the respective fastening strap extends transversely across the bearing member over the footing.

In another particularly preferred form of the invention, the at least one opening or recess for receiving one of the fastening straps includes a cavity or channel formed in an end region of each bearing member to receive the fastening strap in an axial direction. In this connection, the cavity or channel may be formed in the at least one footing of the bearing member and may have an opening at the end region of the bearing member for insertion of the fastening strap.

In a preferred form of the invention, one or more of the plurality of fastening straps is/are adapted to engage the respective bearing member via a physical connection to the bearing member, and preferably to a footing of the bearing member, e.g. by one or more connector elements or fasteners, such as rivets, or by adhesive connection.

The mounting system of the present invention provides numerous advantages when compared with conventional solar panel mounting systems described at the outset. For example, the mounting system of the invention avoids the need for any puncture or penetration of an outer sealing layer or membrane covering the rooftop with bolt- or screw-type fasteners. In addition, the mounting system of the invention enables subsequent removal of the solar panel array and the bearing members without any damage to an outer sealing layer or membrane on the rooftop. That is, the straps may be cut or severed to leave just the bonded securing region thereof attached to the rooftop, while the rest of the solar panel array and mounting system and can be disassembled and removed from the rooftop. The outer sealing layer that covers the rooftop thus remains entirely intact and unaffected.

According to another aspect, the present invention provides a solar panel assembly comprising a solar panel mounting system according to the invention as described above, and one or more solar panels to be mounted on the mounting system.

According to a further aspect, the present invention provides a bearing member for mounting a solar panel or a support frame for a solar panel on a rooftop surface, the bearing member having:
a base comprising at least one footing for supporting the bearing member on the rooftop surface;
an attachment region for attaching the solar panel or the support frame for the solar panel to the bearing member; and
means for receiving and/or engaging a fastening strap which is configured or designed to extend from the bearing rail.

In a preferred form of the invention, the means for receiving and/or engaging the fastening strap comprises at least one opening or recess from which and/or through which the fastening strap extends in use. The at least one opening or recess is preferably provided between the base and the attachment region of the bearing member. The at least one opening or recess may, for example, include an aperture for receiving the fastening strap extending transversely across or through the bearing member, with the aperture preferably being configured as a slot.

In a preferred form of the invention, the attachment region is at an upper part of each bearing member and is spaced from the footing by one or more side walls extending upwardly from the footing. Thus, the at least one aperture is preferably provided through the one or more side wall adjacent or in close proximity to the footing such that the respective fastening strap extends transversely over the footing.

In a further preferred form of the invention, the at least one opening or recess from which and/or through which the fastening strap extends in use as a means for receiving and/or engaging the fastening strap comprises a cavity or channel formed in an end region of the bearing member from which the fastening strap extends in an axial direction. In this connection, the cavity or channel may be formed in the at least one footing of the bearing member and may have an opening at the end region of the bearing member for insertion of the fastening strap.

According to still a further aspect, the present invention provides a method of mounting one or more solar panels or a support frame of a solar panel on a rooftop surface, the method comprising the steps of:
arranging a plurality of elongate bearing members spaced apart and substantially parallel to one another on a rooftop surface, wherein each of the bearing members is adapted for mounting a solar panel or a support frame of a solar panel thereon; and
providing a plurality of fastening straps for securing the bearing members to the rooftop surface, wherein each of the fastening straps has a securing region to be fastened to the rooftop surface, and
arranging each of the fastening straps to engage at least one of the bearing members, preferably such that a securing region thereof extends from the respective one of the bearing members.

According to yet another aspect, the present invention provides a method of forming a bearing member for mounting a solar panel or a support frame for a solar panel on a rooftop surface, the method comprising the steps of:
providing an elongate strip of sheet material;
forming one or more apertures in the elongate strip of sheet material, whereby if more than one, the apertures are spaced apart from one another in a longitudinal direction;
folding a central portion of the elongate strip of sheet material to form an attachment region of the bearing member for attaching the solar panel or the support frame for the solar panel thereto;
folding a lateral or peripheral portion of the elongate strip of sheet material to form a base having at least one footing for supporting the bearing member on the rooftop surface.

In a preferred form of the invention, the apertures are formed in a region of the elongate strip between the attachment region formed folding a central portion of the elongate strip and the footing formed by folding a lateral or peripheral portion of the elongate strip. The step of forming the one or more apertures preferably includes cutting, punching or stamping a plurality of apertures longitudinally spaced apart from one another along the strip of sheet material. The apertures may, for example, be formed as elongate slots.

In a preferred form of the invention, the step of folding a central portion of the elongate strip of sheet material includes folding the strip along two substantially parallel fold-lines that extend longitudinally centrally of the strip. The elongate strip is preferably folded through at least approximately 90° along each of these two substantially parallel central fold-lines, whereby each fold is in an opposite direction about a longitudinal axis of the strip, such that the folded portions are preferably folded towards one another.

In a preferred form of the invention, the step of folding a lateral or peripheral portion of the elongate strip includes folding the strip along substantially parallel fold-lines extending longitudinally of the strip along opposite lateral or peripheral edge regions of the elongate strip. The strip is preferably folded through at least about 90° along each of these fold-lines at the opposite lateral or peripheral edge regions of the strip, whereby each fold is in an opposite direction about a longitudinal axis of the strip. The direction of each of these folds about the longitudinal axis is preferably opposite to the fold direction of an adjacent central portion fold-line.

In a particularly preferred form of the invention, the step of folding the lateral or peripheral portion of the elongate strip further includes folding opposite outermost lateral or peripheral edge regions of the elongate strip through about 180°, with each of these folds being in an opposite direction about a longitudinal axis of the strip. In this way, a slot-like cavity or channel may be formed in the footing for receiving a fastening strap in an axial direction, as discussed above. This and other aspects of the invention will become more clear from the following description with reference to the drawings.

It will be appreciated that the terms "upper", "lower", "upwardly", "downwardly", "lateral", "laterally" as well as other similar terms used herein in respect of various parts of the mounting system and bearing member of the invention are intended to be given their ordinary meaning in view of the normal or in-use orientation of the mounting system described herein. It will also be appreciated, however, that other interpretations of these terms may be appropriate depending on the particular orientation of the system and/or its respective parts at the time.

### Brief Description of the Drawings

The above and further features and advantages of the invention will become more readily apparent from the following detailed description of preferred embodiments of the invention with reference to the accompanying drawings, in which like reference characters identify like features, and in which:
Fig. 1 is a perspective view of a mounting system for mounting a solar panel on a rooftop according to a conventional arrangement;
Fig. 2 is a cross-sectional view of a bearing member for a solar panel mounting system according to a preferred embodiment of the present invention;
Fig. 3 is a longitudinal side view of the bearing member shown in Fig. 2;
Fig. 4 is a cross-sectional view of a mounting system (or part thereof) for mounting a solar panel according to a preferred embodiment of the present invention;
Fig. 5 is a plan or top view of the mounting system of the invention shown in Fig. 4;
Fig. 6 is a plan or top view of a mounting system (or part thereof) according to an embodiment of the invention showing an end region of a bearing member;
Fig. 7 is a cross-sectional view along the lines A-A through the mounting system shown in Fig. 6;
Fig. 8 is a detailed view of that part of the mounting system in Fig. 7 labelled "C";
Fig. 9 is a cross-sectional view along the lines B-B through the mounting system shown in Fig. 6;
Fig. 10 is a side view of a mounting system (or part thereof) for mounting a solar panel according to an embodiment of the invention;
Fig. 11 is a plan or top view of the part of the mounting system shown in Fig. 10;
Fig. 12 is a top or plan view of a blank for forming a bearing member according to a preferred form of the invention, the blank shown in a small format with dimensions given in millimetres;
Fig. 13 is a cross-sectional view of a bearing member according to an embodiment of the invention and largely corresponding to Fig. 2, but shown in a small format with dimensions given in millimetres and showing the fold-lines 111, 121 and 122 of the blank;
Fig. 14 is a detailed view of that part of the blank in Fig. 12 labelled "Y"; and
Fig. 15 is a detailed view of that part of the blank in Fig. 14 labelled "Z".

### Detailed Description of the Preferred Embodiments

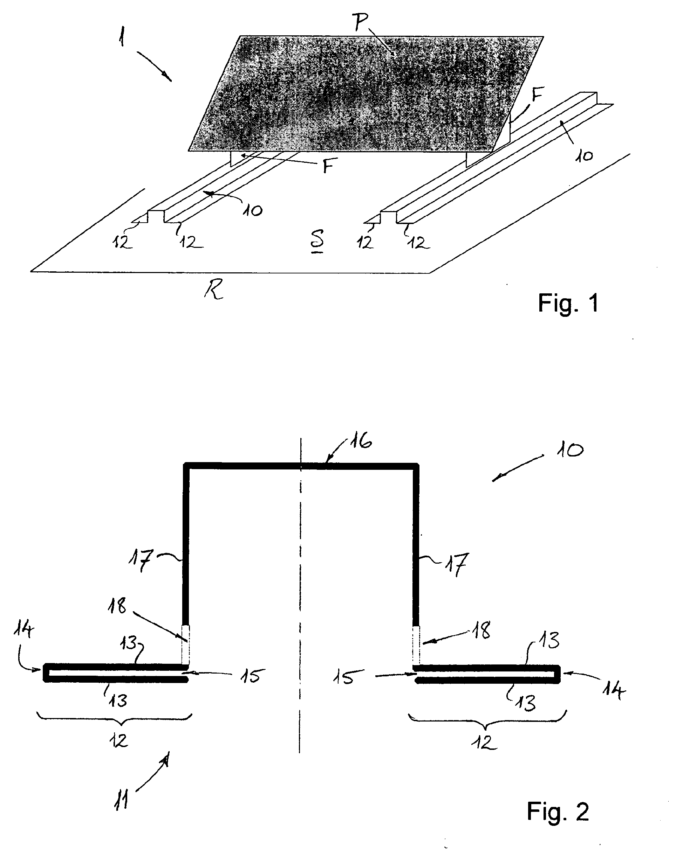

Firstly, Fig. 1 of the drawings shows a schematic arrangement of some of the parts of a mounting system 1 of the invention with which a solar panel P is mounted on a sealed surface of a flat rooftop R. For the sake of simplicity, the mounting system 1 in Fig. 1 only shows a single pair of elongate bearing members 10 arranged spaced apart and substantially parallel to one another on the outer sealing layer S of the rooftop R, and a single solar panel P is shown supported by the system 1. It will be appreciated, however, that the solar panel mounting system 1 will typically comprise many more of the elongate bearing members 10, and will be configured to support a large number of solar panels P. Some elements of a frame F for supporting and/or fixing the solar panel P can be seen attached to an upper or top part of the bearing members 10. This frame F may be designed to orient or position the solar panel P at a particular pitch or angle relative to the surface of the rooftop for optimal collection of the sun's rays. In this embodiment, therefore, the solar panel(s) P is/are not directly attached to the elongate bearing members 10, but rather is/are fixed to the frame F which is supported and attached on the bearing members. The solar panel P, which may be any one of the various different photovoltaic modules currently available, is arranged extending between the two substantially parallel bearing members 10.

As will be appreciated by the skilled reader, the bearing members 10 are typically straight elements with a substantially uniform or constant cross-section and may, for example, be formed from aluminium, although other materials, such as other metals (e.g. steel) or polymer plastics (e.g. polyethylene HDPE or polyurethane PU) are also contemplated by the present invention. The bearing members 10 essentially form elongate structural elements upon which the solar panels are (either directly or indirectly) mounted and supported in the framework of the mounting system 1. The bearing members 10 will hereafter also be referred to as bearing sections or bearing "rails", as they are often known in the art.

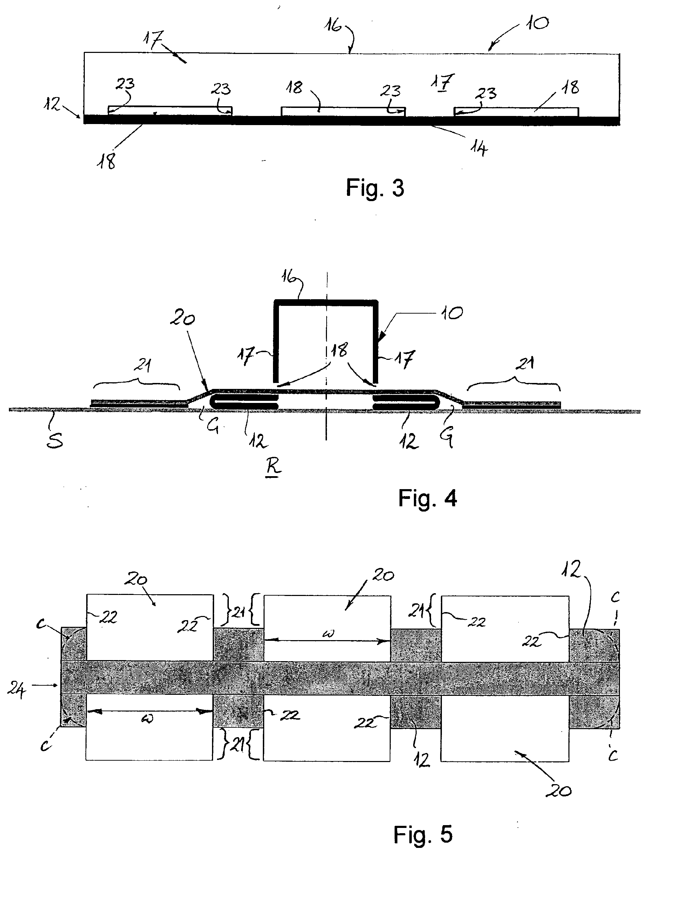

With reference now to Figs. 2 and 3 of the drawings, a bearing rail 10 according to one preferred embodiment of the invention will be described. The bearing rail 10 has an essentially uniform cross-section along its length and is formed as a channel section or "hat"-section, as such profiles are sometimes called. In this connection, the bearing rail 10 comprises a base region 11 consisting of two laterally opposite footings 12, each being in the form of a laterally outwardly projecting flange which extends along substantially the entire length of the bearing rail 10. It will be noted that each of the flange-type footings 12 in this embodiment of the bearing rail 10 comprises a pair of upper and lower plate members 13 created by forming the flange from plate or sheet material which is folded or doubled-over on itself through about 180°. The outermost lateral edge 14 of each of the footings 12 may thereby be provided with a curved or rounded profile, which prevents damage to the outer sealing layer or membrane S when positioning the bearing member 10 on the rooftop R. The upper and lower plate members 13 in each of the footings 12 of this embodiment of the rail 10 create or form a narrow, slot-like channel or cavity 15 there-between. This aspect of the footings 12 will be discussed in more detail later.

As is particularly apparent from Fig. 2, the bearing rail 10 comprises an inverted, substantially right-angled U-shaped section having a substantially horizontal upper part 16 which forms an attachment region for attaching a solar panel P either directly thereto or for attaching elements of the support frame F upon which the solar panel P is then mounted. Attachment of a solar panel P or a support frame F to the horizontal attachment region 16 of the bearing rail 10 is typically performed using screw or bolt fasteners. Furthermore, in this embodiment of the bearing rail 10, generally vertical side walls 17 of the rail extend from the footings 12 to the attachment region 16 at the upper part thereof.

With particular reference to Fig. 3, it will be noticed that the bearing rail 10 in this embodiment also includes three apertures 18 in the form of elongated rectangular slots arranged at regular intervals spaced apart along the length of the bearing rail. These apertures 18 are formed in alignment through the opposite side walls 17 of the rail section at positions located adjacent or in a close proximity to the footings 12 which extend at the laterally opposite sides of the bearing rail 10.

The purpose of this particular configuration of the bearing rail 10 becomes clearer with reference to Figs. 4 and 5 of the drawings, which illustrate the components of the mounting system 1 of the invention in use on a sealing layer S of a rooftop. The slot-like apertures 18 formed through the side walls 17 of the bearing rail 10 are designed to receive and accommodate flexible strap members 20. The straps 20 are formed as flexible webs, strips, or sheet members, and each is designed to be inserted through a respective one of the rectangular slots 18 such that the straps 20 extend transversely across the bearing rail 10 with an opposite end region 21 of each strap extending from the rail and being respectively located at a lateral side thereof.

In this particular embodiment of the invention, the end regions 21 of each of the straps 20 forms a securing region for fixedly securing the strap to the sealing layer S forming the outer surface or waterproof "skin" of the rooftop R. In this regard, at least the end securing regions 21 of each fastening strap 20 are formed from a material that is suitable for adhesive or solvent bonding or fusion/welding with the material of the outer sealing layer S of the rooftop. For example, the end securing regions 21 (and optionally the entirety) of each fastening strap 20 may be formed from a material selected from the group consisting of thermoplastic polyolefins (TPOs), flexible polyolefin alloys (FPA), ethylene-propylene-diene M-class rubber (EPDM), polyvinylchloride (PVC) and polymer-bitumen. Each of the straps 20, on the other hand, also includes an engagement region - in this embodiment, in a central region thereof - which engages the respective bearing rail 10, e.g. via the slots 18 and via contact with the upper side of the footings 12, to hold the rail in position on the roof.

Thus, as can be seen in Fig. 4, the securing regions 21 are securely bonded to the sealing layer S of the rooftop such that each of the fastening straps 20 forms a restraining member for holding the bearing rails firmly in position on the surface of the rooftop. The securing regions 21 can be seen to be arranged and bonded to the outer sealing layer or membrane S in an area outside a plan or vertical projection of the respective bearing rail 10 on the rooftop surface - that is, areas which are laterally to either side of the footings 12 of the bearing member. Nevertheless, the fastening straps 20 reliably operate to prevent any unwanted lateral movement of the bearing rails 10, which are thus effectively bound or strapped to the rooftop surface. A small space or gap G may be left between each of the footings 12 and the adjacent bonded securing region 21 of each strap 20 to allow for thermal expansion of the bearing rails 10. The straps 20 themselves, however, may be sufficiently resilient to accommodate an amount of expansion should little or no gap G be provided.

In this connection, during installation of a bearing rail 10 in the mounting system 1 of this embodiment, one end region 21 of a fastening strap 20 may firstly be bonded or welded to the sealing layer S of the rooftop surface on one side of the bearing rail, and subsequently the opposite end region 21 of the same strap 20 may be tensioned against the completed bond or weld before bonding or welding is carried out at the second end region. That is, each of the straps 20 can be tensioned in engagement over the bearing rail 10 (i.e. in this case, over the footings 12 of the rail) to ensure a stable and secure strapping of the bearing member to the rooftop surface. If the straps 20 are fastened to the sealing layer S by welding, conventional heating or welding devices for fusing flexible webs or membranes in roofing applications may be used. Because an end region of each fastening strap 20 extends from the rails 10 and the securing regions 21 are thus located beyond or outside a vertical projection of the rails, the welding or fusing procedure can be carried out in an uncomplicated manner.

By dimensioning each of the fastening straps 20 to have a width w that substantially corresponds to the length of each of the slots or apertures 18 formed through the side walls 17 of the bearing rail 10, each of these straps 20 may also acts to prevent any unwanted longitudinal displacement of the bearing rail. That is, under the influence of forces (e.g. from wind gusts, thermal expansion) which may act upon the bearing rails 10 in a longitudinal direction, side edge regions 22 of each of the fastening straps 20 may bear against the ends 23 of each of the slots or apertures 18 to restrict longitudinal movement of the rail. Of course, if the bearing rails 10 are made of aluminium or another metal, such as steel, it can be desirable to form the edges 23 of the slots 18 with a rounded profile and/or to provide the side edge regions 22 of each of the fastening straps 20 with a durable or robust structure to prevent and/or minimize any potential cutting or tearing the material of the straps 20 as a result of contact with ends 23 of the slots. As an alternative, the width w of the straps 20 may be dimensioned so as to be slightly smaller than the length of the slots 18, such that the edge regions 22 do not ordinarily come into contact with the slot ends 23. As the ordinary skilled person will appreciate, the actual shape and/or dimensions of the fastening straps 20 can be selected as desired. For example, in the embodiment shown schematically in Fig. 5 of the drawings, each of the straps 20 consists of a generally rectangular sheet, and each one of these sheet-like straps 20 is inserted through a pair of the slot-like apertures 18 formed aligned in the side walls 17 of the hat section to extend transversely across the bearing rail 10. It will be noted, however, that the straps 20 could also be formed as relatively thin strips and that two or more fastening straps could, at least potentially, be inserted through each of the apertures 18 - though such an arrangement could make for a more complicated or more cumbersome installation of the mounting system 1 of the invention. In Fig. 5 of the drawings, it will also be noticed that curved or rounded corners c are shown in broken lines as an optional feature of the footings 12 in the base 11 of the bearing rail 10. Such rounded corners c are designed to minimise the risk of inadvertently tearing or puncturing the outer sealing layer S of the roof while the rails 10 are being positioned on the rooftop during assembly and installation of the solar panel array.

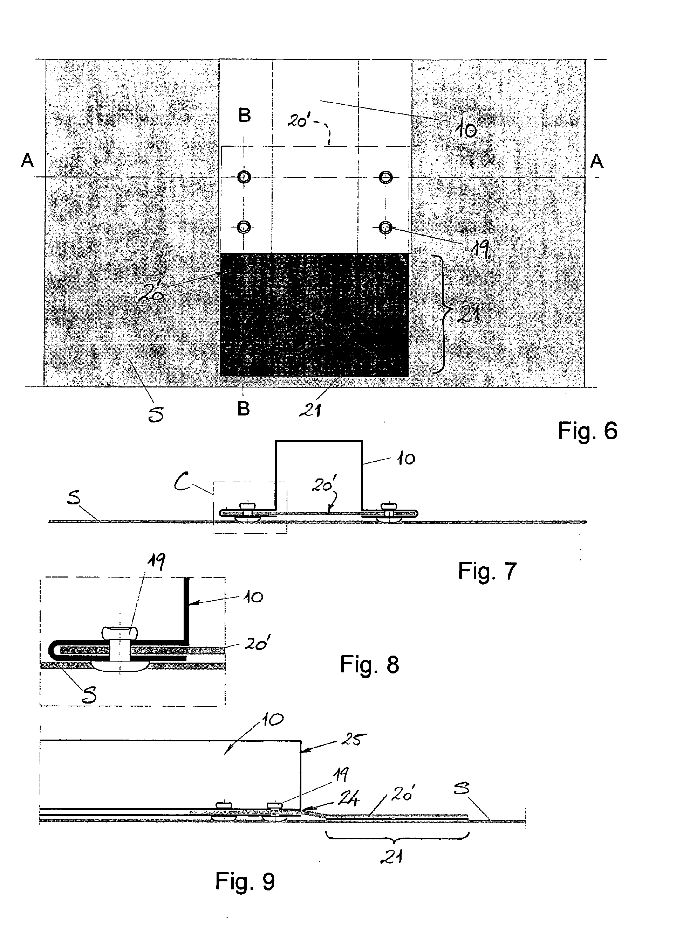

Referring now to Figs. 6 to 9 of the drawings, an alternative and/or additional technique for achieving longitudinal fixation and/or stability of the bearing rails 10 in the mounting system 1 of the invention is illustrated. According to this aspect of the invention, the narrow channel or cavity 15 formed between the upper and lower plate members 13 of each of the footings 12 has an opening 24 at an end region of each bearing rail 10, and this narrow channel or cavity 15 is able to receive an end fastening strap 20' in an axial direction. In particular, as can be clearly seen with reference to Fig. 6 and Fig. 9, the end fastening strap 20' of a substantially flexible material can be inserted into the narrow slot-like cavity or channel 15 defined by each of the footings 12 such that a portion (approximately half) of the end strap 20' is arranged within the footings (shown in broken lines in Fig. 6) and approximately half of the strap 20' extends from an axial end 25 of the bearing rail. That part of the fastening strap 20' within the slot-like cavity 15 between the upper and lower plate members 13 can be physically connected to the bearing rail 10 via one or more connecting elements 19, such as rivets, as illustrated in Figs. 7 and 8 of the drawings. The end region 21 of the strap 20' which projects or extends from the axial end 25 of the bearing rail 10 then forms a securing region for adhesive bonding or hot/cold welding to the sealing layer S, as discussed before.

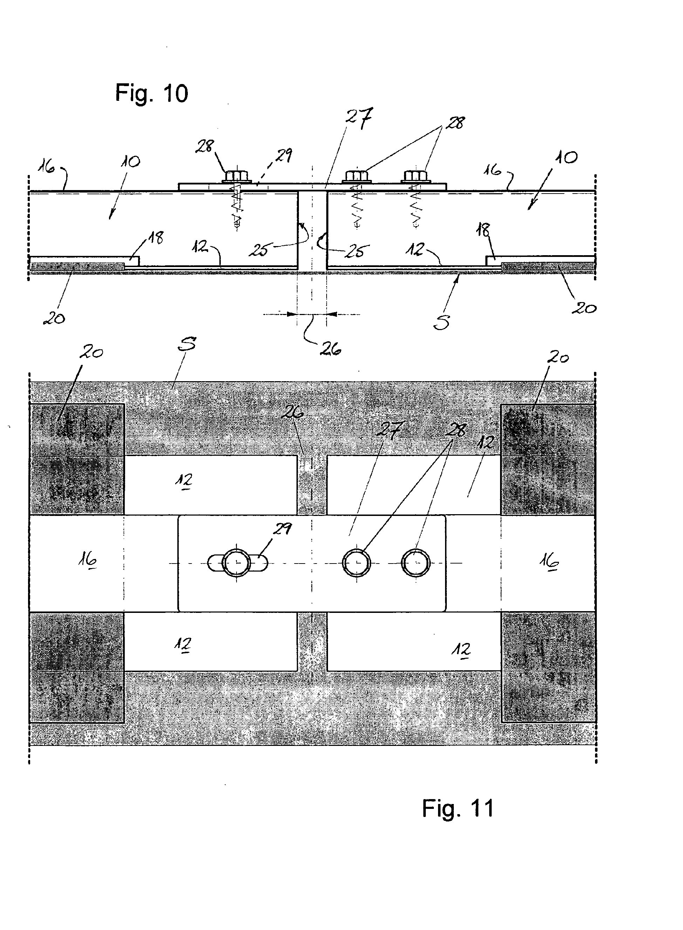

The individual bearing rails according to the present invention are preferably fabricated in lengths of 3000 mm or 6000 mm, though other lengths can be selected as desired. When the rooftop R upon which the solar panel array is to be provided has an extensive surface area, it is not unusual that two or more bearing rails 10 are arranged axially aligned with each other, in addition to a parallel arrangement of the bearing rails. In this connection, Figs. 10 and 11 of the drawings illustrate an embodiment of the mounting system 1 in which two bearing rails 10 are arranged in axial alignment with one another. In this embodiment, a small gap 26 (e.g. 15 mm) has been left between the opposite ends 25 of the two bearing rails 10. This gap 26 permits some relative movement in an axial direction between the two rails 10 of the mounting system 1, which may arise e.g. due to thermal expansion. The mounting system 1 includes a joining member 27, such as a joining plate, which is adapted to be rigidly fixed by screws 28 to the top or attachment region 16 at the end 25 of one of the two bearing rails, while a slot 29 and the respective pin/screw 28 connection allow relative displacement of the end 25 of the other bearing rail. It will be noted that, where a plurality of rails 10 are arranged and connected in axial alignment with each other as shown in Figs. 10 and 11, no use is typically made of axially extending end straps 20' (as per Figs. 6 to 9) at the connected end regions 25 of the bearing rails 10. Rather, end fastening straps 20' which extend axially from the cavity or channel 15 for longitudinal stabilisation of the rails 10 are typically only employed at the extreme opposite ends 25 of the composite (i.e. combined) bearing rails 10.

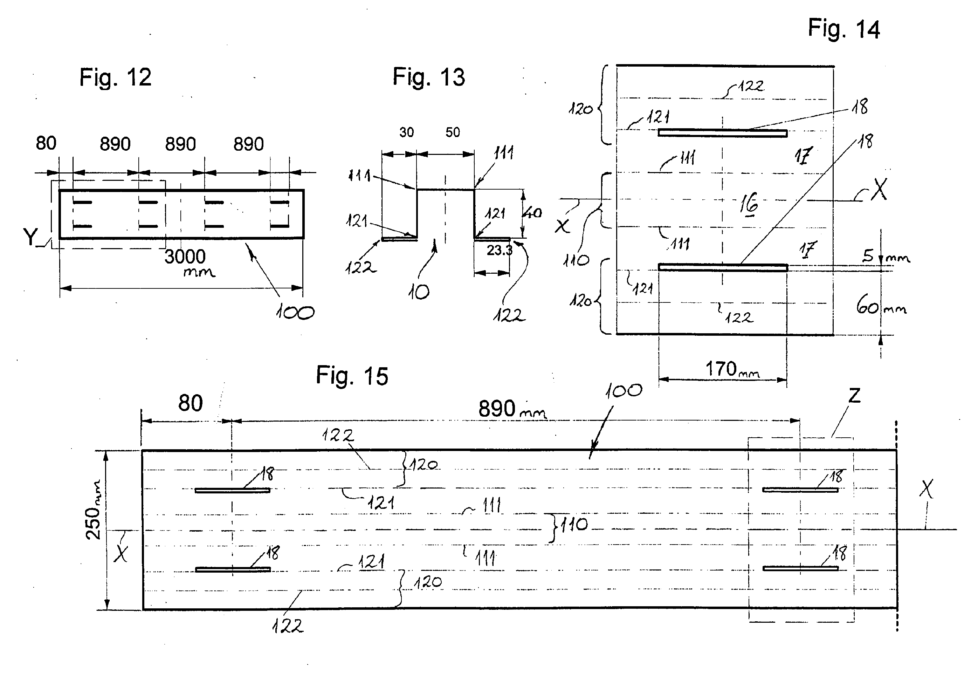

With reference now to Fig. 12 of the drawings, a top or plan view of a blank 100 for forming a bearing rail 10 according to a preferred form of the invention is shown in a small format with dimensions given in millimetres. Similarly, Fig. 13 of the drawings shows a cross-sectional view of a bearing member according to an embodiment of the invention in a small format with dimensions given in millimetres. It will be appreciated that the dimensions shown are for illustrative purposes only, and that the dimensions of the blank 100 (and thus of the rail 10) can be modified and selected to meet the demands of the specific solar panel array to be installed.

Figs. 14 and 15 of the drawings illustrate the fold-lines for transforming a blank 100 fabricated from e.g. a sheet of aluminium into a bearing rail 10 according to the invention. In this connection, the method of forming a bearing rail 10 for mounting a solar panel P comprises the steps of providing the blank 100 e.g. in the form of an elongate strip of aluminium sheet material, and cutting, punching, or stamping a plurality of the slot-like apertures 18 longitudinally spaced apart from one another along the strip of sheet material. A central portion 110 of the elongate blank 100 is provided with two substantially parallel fold-lines 111 which extend longitudinally centrally of the blank 100. The blank 100 is folded through approximately 90° along each of these substantially parallel central fold-lines 111, whereby these folds are in opposite directions about a longitudinal axis X of the strip, such that the folded portions are folded towards one another to form the upper attachment region 16 in the centre of the bearing rail 10 and the depending side walls 17.

Furthermore, two laterally opposite or peripheral portions 120 of the blank 100 are provided with substantially parallel fold-lines 121 that extend longitudinally of the blank along opposite lateral or peripheral edge regions thereof. The blank 100 is folded through about 90° along each of these fold-lines 121 at the laterally opposite or peripheral portions 120, whereby these folds occur in opposite directions about the longitudinal axis X of the strip to form a base 11 comprising two footings 12 for supporting the bearing rail 10 on the rooftop surface. The laterally opposite or peripheral portions 120 each have a further longitudinally extending fold-line 122, each of which is folded through about 180°, with these folds again being in opposite directions about the longitudinal axis X of the blank 100 to complete the formation of the two footings 12 with upper and lower plate members 13, and with the fold-line 122 corresponding to the rounded edge 14.

It will be appreciated that the above description of the preferred embodiments of the invention with reference to the drawings has been made by way of example only. Accordingly, a person skilled in the art will appreciate that various changes, modifications and/or additions may be made to the parts particularly described and illustrated without departing from the scope of the invention as defined in the appended claims.

## Claims

1. Mounting system (1) for mounting one or more solar panels (P), comprising:
a plurality of elongate bearing members (10) adapted to be arranged spaced apart and substantially parallel to one another on a rooftop surface, wherein each of the bearing members (10) is adapted for mounting a solar panel (P) or a support frame (F) for a solar panel thereon; and
a plurality of fastening straps (20, 20') for fastening the bearing members (10) to the rooftop surface, wherein each of the fastening straps (20, 20') is adapted to engage at least one of the bearing members (10) and includes a securing region (21) for securing the strap to the rooftop surface.

2. Mounting system (1) according to claim 1, wherein each of the fastening straps (20, 20') is arranged to extend from one of the bearing members (10), preferably such that the securing region (21) of each fastening strap (20, 20') is arranged outside or beyond a vertical projection of the respective bearing member (10) on the rooftop surface.

3. Mounting system (1) according to claim 1 or claim 2, wherein each of the fastening straps (20, 20') is arranged to extend over, across and/or through one of the bearing members (10), and/or
wherein the securing region (21) of each fastening strap (20, 20') is adapted to be secured to the rooftop surface by adhesive bonding, by solvent bonding, or cold or hot fusion or welding.

4. Mounting system (1) according to any one of the preceding claims, wherein each bearing member (10) comprises at least one opening or recess (15, 18) for receiving one of the fastening straps (20, 20') when the respective fastening strap (20, 20') extends over, across, through, and/or from the bearing member (10).

5. Mounting system (1) according to claim 4, wherein the at least one opening or recess comprises an aperture (18) formed in each bearing member (10) for receiving and/or accommodating the respective fastening strap (20) extending transversely across or through the bearing member (10), the at least one aperture (18) preferably formed as a slot through which the strap (20) extends.

6. Mounting system (1) according to claim 4 or claim 5, wherein the at least one opening or recess includes a cavity or channel (15) formed in an end region (26) of each bearing member (10) for receiving one of the fastening straps (20') in an axial direction.

7. Mounting system (1) according to any one of the preceding claims, wherein each fastening strap (20, 20') is at least partially, and preferably substantially entirely, formed from a flexible material, preferably being a material suitable for adhesive or fusion bonding with the rooftop surface; and/or
wherein the securing region (21) is provided at an end region of the strap and presents an area for adhesive bonding, solvent bonding, or cold or hot fusion or welding with the rooftop surface.

8. Mounting system (1) according to any one of claims 4 to 7, wherein each bearing member (10) comprises:
a base (11) having at least one footing (12) for supporting the bearing member (10) on the rooftop surface, and
an attachment region (16) for attaching a solar panel (P) or a support frame (F) for the solar panel (P) to the bearing member (10),
wherein the at least one aperture (18) is located between the footing (12) and the attachment region (16), preferably adjacent or in close proximity to the footing (12) such that the respective fastening strap (20) extends transversely over the footing (12) of the bearing member (10).

9. Mounting system (1) according to any one of the preceding claims, wherein at least one of the plurality of fastening straps (20, 20') is/are adapted to engage the respective bearing member (10) via a physical connection or attachment to the bearing member, and preferably to a footing (12) thereof, e.g. by one or more connectors or fasteners (19), such as rivets, or by adhesive connection.

10. Mounting system (1) according to any one of the preceding claims, wherein each bearing member (10) is formed as a channel section, preferably as a U-shaped channel section, and more preferably as a "hat"-section.

11. Mounting system (1) for one or more solar panels (P), comprising:
a plurality of elongate bearing members (10) adapted to be arranged spaced apart and substantially parallel to one another on a rooftop surface, wherein each of the bearing members (10) is adapted for mounting a solar panel (P) or a support frame (F) of a solar panel thereon; and
a plurality of flexible securing members (20) for securing the bearing members (10) to the rooftop surface, wherein each of the securing members (20) is adapted to extend from at least one of the bearing members (10) and includes a securing region (21) to be fastened to the rooftop surface.

12. Bearing rail (10) for mounting a solar panel (P) or a support frame (F) of a solar panel (P) on a rooftop surface, the bearing rail (10) having:
a base (11) comprising at least one footing (12) for supporting the bearing rail (10) on the rooftop surface;
an attachment region (16) for attaching the solar panel (P) or the support frame (F) of the solar panel (P) to the bearing rail (10); and
means (15, 18, 19) for receiving and/or engaging a fastening strap (20, 20') which, in use, extends from the bearing rail (10).

13. Bearing rail (10) according to claim 12, wherein the means (15, 18, 19) for receiving and/or engaging the fastening strap (20, 20') comprises at least one opening or recess from which and/or through which the fastening strap (20, 20') is adapted to extend in use.

14. Bearing rail (10) according to claim 13, wherein the at least one opening or recess comprises one or more aperture (18) for receiving the respective fastening strap (20) which extends from or transversely across or through the bearing rail (10),
wherein the aperture/s (18) is/are preferably provided between the base (11) and the attachment region (16) and is/are optionally configured as a slot.

15. Bearing rail (10) according to claim 14, wherein the attachment region (16) is at an upper part of each bearing rail (10) and is spaced from the footing (12) by one or more wall (17) extending upwardly from the footing, and wherein the at least one aperture (18) is provided through the one or more wall (17), preferably in close proximity to the footing (12) such that the respective fastening strap (20) extends transversely over the footing (12).

16. Method of forming a bearing member (10) for mounting a solar panel (P) or a support frame (F) for a solar panel (P) on a rooftop surface, the method comprising the steps of:
providing an elongate strip of sheet material;
forming one or more apertures (18) in the elongate strip of sheet material, whereby, if more than one, the apertures are spaced apart from one another in a longitudinal direction;
folding a central portion of the elongate strip of sheet material to form an attachment region (16) of the bearing member (10) for attaching the solar panel (P) or the support frame (F) for the solar panel (P) thereto;
folding a lateral or peripheral portion of the elongate strip of sheet material to form a base (11) having at least one footing (12) for supporting the bearing member (10) on a rooftop surface.
